# EUROPÄISCHE PATENTSCHRIFT

(11) **EP 3 471 974 B1**
(45) Veröffentlichungstag und Bekanntmachung des Hinweises auf die Patenterteilung: **15.09.2021**
(21) Anmeldenummer: 17729120.0
(22) Anmeldetag: 12.06.2017
(51) Int. Cl.: B60C 23/04

(54) **ELEKTRONISCHE RADEINHEIT FÜR EIN FAHRZEUGRAD**
ELECTRONIC WHEEL CONTROL UNIT
UNITÉ ÉLECTRONIQUE DE COMMANDE D'UNE ROUE

(30) Priorität: 21.06.2016 DE 102016211047
(43) Veröffentlichungstag der Anmeldung: 24.04.2019
(73) Patentinhaber: Continental Automotive GmbH, 30165 Hannover (DE)
(72) Erfinder: LÖFFLER, Michael, 93197 Zeitlarn (DE)
(74) Vertreter: Continental Corporation
(86) Internationale Anmeldenummer: PCT/EP2017/064231
(87) Internationale Veröffentlichungsnummer: WO 2017/220359

(56) Entgegenhaltungen:
- DE-A1-102012 216 576
- DE-T2- 60 105 187
- US-A1- 2012 007 729

## Beschreibung

Die vorliegende Erfindung betrifft eine elektronische Radeinheit für ein Fahrzeugrad.

Derartige elektronische Radeinheiten werden als radseitige Komponenten von so genannten Reifendrucküberwachungssystemen zum Überwachen des Reifendrucks bei Kraftfahrzeugen eingesetzt. Ein derartiges Reifendrucküberwachungssystem, oftmals auch als TPMS ("tire pressure monitoring system") bezeichnet, gestattet es im Falle eines Druckverlustes an einem Fahrzeugrad z. B. eine entsprechende Warnung an den Fahrer des Fahrzeuges auszugeben. Jede an einem betreffenden Fahrzeugrad (z. B. an einer Felge, an einem Ventil oder an einem Reifen) anzuordnende Radeinheit ist zu diesem Zweck mit Mitteln zum Erfassen des Reifendrucks und mit Mitteln zum Senden von Reifendruckinformation ausgestattet.

Aus der DE 10 2012 216 576 A1 ist eine Radeinheit bekannt, die ein Erfassen des Reifendrucks eines Reifens eines Fahrzeugrades, ein Speichern von Reifeninformation des Reifens und ein Senden von Reifendruckinformation und Reifeninformation ermöglicht, wobei die Radeinheit dazu ausgebildet ist, in einem ersten Betriebsmodus (wenn erkannt wurde, dass die Radeinheit in einem Reifen verbaut ist) ein Speichern von Reifeninformation zu ermöglichen und in einem zweiten Betriebsmodus (wenn erkannt wurde, dass die Radeinheit nicht in einem Reifen verbaut ist) ein solches Speichern von Reifeninformation zu verhindern.

Wenngleich bei der genannten Radeinheit verhindert wird, dass Reifeninformation in die Radeinheit eingespeichert wird und die Radeinheit erst dann in einen (möglicherweise falschen) Reifen integriert wird, so besitzt diese Radeinheit z. B. den Nachteil, dass im normalen Fahrbetrieb des betreffenden Fahrzeuges die in der Radeinheit eingespeicherte Radinformation nicht manipulationssicher ist. Insbesondere ist z. B. nicht vollständig ausgeschlossen, dass in krimineller Weise die gespeicherte Reifeninformation verändert wird.

Aus der DE 601 05 187 T2 ist eine elektronische Radeinheit gemäß dem Oberbegriff des Anspruchs 1 bekannt.

Es ist eine Aufgabe der vorliegenden Erfindung, eine elektronische Radeinheit für ein Fahrzeugrad hinsichtlich der Integrität bzw. Sicherheit von gespeicherter Reifeninformation zu verbessern.

Gemäß eines Aspekts der Erfindung wird eine elektronische Radeinheit zum Erfassen eines Reifendrucks eines Reifens eines Fahrzeugrades, zum Speichern von Reifeninformation des Reifens und zum Senden von Reifendruckinformation und Reifeninformation angegeben. Die Radeinheit ist dazu ausgebildet, in einem ersten Betriebsmodus ein Verändern von gespeicherter Reifeninformation zu ermöglichen und in einem zweiten Betriebsmodus ein Verändern von gespeicherter Reifeninformation zu verhindern. Ferner ist die Radeinheit dazu ausgebildet, bei einer Erfüllung eines ersten Moduswechselkriteriums von dem ersten Betriebsmodus in den zweiten Betriebsmodus zu wechseln, wobei die Erfüllung des ersten Moduswechselkriteriums zumindest von einem für eine Drehbewegung des Fahrzeugrades repräsentativen Betriebsparameter des Fahrzeugrades abhängt.

Die Grundidee dieses Aspekts besteht darin, insbesondere nach einem Verändern von gespeicherter Reifeninformation, z. B. nach einem Rad- bzw. Reifenwechsel in einer Werkstatt, beispielsweise durch ein Losfahren des Fahrzeuges einen automatischen Wechsel in den zweiten Betriebsmodus zu ermöglichen, in welchem sodann die gespeicherte Reifeninformation nicht mehr verändert werden kann. Insbesondere ist die gespeicherte Reifeninformation dann im normalen Fahrbetrieb manipulationssicher.

Ein zusätzlicher Vorteil dieses Aspekts der Erfindung besteht darin, dass im vorstehenden Beispiel das Werkstattpersonal nach einem Verändern der Reifeninformation (z. B. einer Ersteinspeicherung oder einer Aktualisierung der Reifeninformation) keine besondere Handlung zum Validieren der Reifeninformation bzw. zum Blockieren einer nachträglichen weiteren Veränderung der Reifeninformation vornehmen muss. Dies kann vielmehr durch den erwähnten automatischen Wechsel in den zweiten Betriebsmodus realisiert werden.

Es soll im Rahmen dieses Erfindungsaspekts jedoch nicht ausgeschlossen sein, dass ein Wechsel von dem ersten Betriebsmodus in den zweiten Betriebsmodus z. B. bedarfsweise auch durch eine aktive, bevorzugt drahtlose Eingabe eines entsprechenden Wechsel- bzw. Validierungsbefehls an die Radeinheit bewerkstelligt werden kann. Diese optionale Weiterbildung ermöglicht vorteilhaft z. B. den Wechsel in den zweiten Betriebsmodus auch dann, wenn das Fahrzeug nach einer Veränderung der gespeicherten Reifeninformation nicht sogleich bewegt bzw. weggefahren wird und dennoch sogleich ein Wechsel in den manipulationssicheren zweiten Betriebsmodus gewünscht wird.

Die Reifeninformation des Reifens kann beispielsweise Daten betreffend einen Reifenhersteller, einen Reifentyp (z. B. Sommerreifen oder Winterreifen, diagonale oder radiale Bauweise, etc.), zumindest eine Reifenabmessung (z. B. eine Reifenbreite, ein Verhältnis von Flankenhöhe zu Laufflächenbreite, einem Reifendurchmesser, etc.) beinhalten. Darüber hinaus kann die Reifeninformation z. B. Daten betreffend einen Tragfähigkeitsindex und/oder einen Geschwindigkeitsindex beinhalten. Mit anderen Worten beinhaltet die Reifeninformation des Reifens bevorzugt Daten, ausgewählt aus der Gruppe, bestehend aus einem Reifenhersteller, einem Reifentyp, einer Reifenabmessung, einem Tragfähigkeitsindex und einem Geschwindigkeitsindex des Reifens.

Das Abspeichern der Reifeninformation kann z. B. bei einer Montage des betreffenden Fahrzeugrades bzw. Reifens erfolgen und besitzt den Vorteil, dass ohne nennenswerten Mehraufwand nicht nur die Reifendruckinformation sondern auch die Reifeninformation in der Radeinheit zur Verfügung steht und an eine entsprechende Empfangseinrichtung des Fahrzeuges gesendet werden kann, wobei die Reifeninformation vorteilhaft z. B. bei der Steuerung von fahrdynamischen Funktionen (z. B. ABS, ESP, etc.), einer Fahrwerksabstimmung seitens des Fahrzeuges und/oder zur Steuerung von weiteren Funktionalitäten der Radeinheit (z. B. einer Reifenlatschermittlung, einer Profiltiefenermittlung, einer Radlastermittlung, etc.) genutzt werden kann.

Wie bereits erläutert wird eine Bewegung des Fahrzeuges durch eine Überprüfung des ersten Moduswechselkriteriums erfasst, wobei die Erfüllung dieses Kriteriums zumindest von dem für die Drehbewegung des betreffenden Fahrzeugrades repräsentativen Betriebsparameter des Fahrzeugrades abhängt.

Dabei wird als ein solcher Betriebsparameter eine Drehgeschwindigkeit des betreffenden Fahrzeugrades verwendet, d. h. die Erfüllung des ersten Moduswechselkriteriums hängt zumindest von einem Wert einer Drehgeschwindigkeit des Fahrzeugrades ab.

Hierbei kann die Erfüllung des ersten Moduswechselkriteriums z. B. zumindest voraussetzten, dass der Wert der Drehgeschwindigkeit des Fahrzeugrades einen vorbestimmten Schwellwert überschreitet. Dieser Schwellwert kann z. B. fest vorgegeben sein und kann z. B. in einem Bereich von 1,5 UpM (Umdrehungen pro Minute) bis 7 UpM vorgegeben sein. Da seitens der Radeinheit (z. B. anhand der gespeicherten Reifeninformation) der Durchmesser des Fahrzeugrades bekannt sein kann, kann als ein die Drehgeschwindigkeit des Fahrzeugrades repräsentierender Betriebsparameter alternativ auch die mit der Drehgeschwindigkeit des Fahrzeugrades verknüpfte Fahrzeuggeschwindigkeit im Rahmen des ersten Moduswechselkriteriums verwendet werden, wobei die Erfüllung des Kriteriums z. B. zumindest voraussetzen kann, dass der Wert dieser entsprechenden Fahrzeuggeschwindigkeit einen vorbestimmten Schwellwert überschreitet, der z. B. im Bereich von 5 km/h bis 30 km/h vorgegeben sein kann.

Im einfachsten Fall wird der betreffende Betriebsparameter des Fahrzeugrades, also z. B. die Drehwinkelgeschwindigkeit des Fahrzeugrades und/oder eine äquivalente Fahrzeuggeschwindigkeit, im Hinblick auf eine entsprechende Schwellwertüberschreitung überwacht.

Ferner kann das erste Moduswechselkriterium hinsichtlich der Berücksichtigung der Drehbewegung des Fahrzeugrades auch komplexer vorgesehen sein, beispielsweise indem für die Erfüllung des Kriteriums alternativ oder zusätzlich eine Drehbeschleunigung des Fahrzeugrades berücksichtigt wird und/oder indem ein zeitlicher Verlauf (also nicht nur ein Momentanwert) eines oder mehrerer für die Drehbewegung repräsentativer Betriebsparameter berücksichtigt wird.

Was die Art und Weise der Erfassung eines für die Drehbewegung des Fahrzeugrades repräsentativen Betriebsparameters anbelangt, so kann hierfür z. B. unmittelbar eine von der Radeinheit gemessene Beschleunigung (z. B. eine Radialbeschleunigung) ausgewertet werden.

Darüber hinaus kann die Erfüllung des ersten Moduswechselkriteriums ferner von anderen Parametern abhängen, insbesondere solchen, die seitens der Radeinheit unmittelbar erfassbar sind. Möglich sind jedoch auch Parameter, die fahrzeugseitig ermittelt werden und sodann z. B. über eine Funkverbindung an die Radeinheit kommuniziert werden.

Diesbezüglich ist in einer Weiterbildung vorgesehen, dass die Erfüllung des ersten Moduswechselkriteriums ferner von einem Inhalt der gespeicherten Reifeninformation abhängt. Damit kann z. B. vermieden werden, dass unplausible oder leere Reifeninformation durch Übergang der Radeinheit in den zweiten Betriebsmodus validiert wird.

Der Begriff "leer" soll hier und im Folgenden bedeuten, dass die als Reifeninformation vorgesehenen reifenspezifischen Daten überhaupt noch nicht gespeichert wurden oder solche Daten gelöscht wurden.

Im Hinblick auf diesen Fall ist gemäß einer Weiterbildung vorgesehen, dass die Erfüllung des ersten Moduswechselkriteriums voraussetzt, dass die Reifeninformation nicht leer ist.

Die elektronische Radeinheit kann ferner dazu ausgebildet sein, bei einer Erfüllung eines zweiten Moduswechselkriteriums von dem zweiten Betriebsmodus in den ersten Betriebsmodus zu wechseln, wobei die Erfüllung des zweiten Moduswechselkriteriums zumindest von dem für eine Drehbewegung des Fahrzeugrades repräsentativen Betriebsparameter des Fahrzeugrades abhängt. Ausgehend von dem zweiten Betriebsmodus, bei welchem eine Veränderung der gespeicherten Reifeninformation blockiert ist, etwa im normalen Fahrbetrieb des Fahrzeuges, kann dadurch bedarfsweise ein automatischer Wechsel in den ersten Betriebsmodus erfolgen, wobei die Erfüllung des hierfür vorgesehenen zweiten Moduswechselkriteriums zumindest wieder von dem für die Drehbewegung des Fahrzeugrades repräsentativen Betriebsparameter des Fahrzeugrades abhängt.

Was die konkrete Wahl dieses Betriebsparameters sowie eine etwaige Mitberücksichtigung weiterer Betriebsparameter anbelangt, sei zunächst auf die vorstehend bereits gegebenen Erläuterungen betreffend einen solchen für die Drehbewegung des Fahrzeugrades repräsentativen Betriebsparameter (und etwaige weitere Betriebsparameter) im Zusammenhang mit dem ersten Moduswechselkriterium verwiesen. Diese Erläuterungen gelten in entsprechender Weise für den bzw. die Betriebsparameter, die hinsichtlich der Erfüllung des zweiten Moduswechselkriteriums berücksichtigt werden können.

So kann die Erfüllung des zweiten Moduswechselkriteriums z.B. zumindest von dem Wert der Drehgeschwindigkeit des Fahrzeugrades abhängen.

Abweichend von der für das erste Moduswechselkriterium erläuterten Ausführungsform, bei welcher die Erfüllung des Kriteriums voraussetzt, dass der Wert der Drehgeschwindigkeit des Fahrzeugrades einen vorbestimmten Schwellwert überschreitet, ist bei dem zweiten Moduswechselkriterium gemäß einer Ausführungsform vorgesehen, dass dessen Erfüllung zumindest voraus- setzt, dass der Wert der Drehgeschwindigkeit einen vorbestimmten Schwellwert unterschreitet.

Was die Vorgabe, z. B. feste Vorgabe, dieses Schwellwertes anbelangt, so wird wiederum auf die weiter oben bereits gegebenen Erläuterungen im Zusammenhang mit einem bei dem ersten Moduswechselkriterium gegebenenfalls vorgesehenen Schwellwert verwiesen. Die weiter oben angegebenen Bereiche, sei es ein Bereich der Drehgeschwindigkeit (z. B. in Umdrehungen pro Minute) oder ein über den Fahrzeugraddurchmesser damit verknüpfter und somit äquivalenter Bereich einer Fahrzeuggeschwindigkeit, können auch für den bei dem zweiten Moduswechselkriterium gegebenenfalls berücksichtigten Schwellwert vorgesehen sein.

In einer besonders bevorzugten Ausführungsform ist vorgesehen, dass die Erfüllung des zweiten Moduswechselkriteriums ferner voraussetzt, dass der Reifendruck einen vorbestimmten Schwellwert unterschreitet.

Dieser Schwellwert kann z. B. fest vorgegeben sein und z. B. in einem Bereich von 1 bar bis 1,6 bar, bevorzugt in einem Bereich von 1,3 bar bis 1,5 bar, vorgegeben sein.

Bei letzterer Ausführungsform kann sich in der Praxis beispielsweise folgendes Szenario ergeben: Wenn im normalen Fahrbetrieb des Fahrzeuges z. B. ein Reifendruck drastisch abfällt (was dem Fahrer z. B. von dem Reifendrucküberwachungssystem signalisiert werden kann) und der Fahrer daraufhin das Fahrzeug soweit abbremst bzw. zum Stillstand bringt, dass der betreffende Schwellwert der Drehgeschwindigkeit des betreffenden Fahrzeugrades bzw. der Schwellwert der Fahrzeuggeschwindigkeit unterschritten wird, so wechselt die Radeinheit in den ersten Betriebsmodus.

In einer bevorzugten Ausführungsform eines Wechsels von dem zweiten Betriebsmodus in den ersten Betriebsmodus, der durch die Erfüllung des zweiten Moduswechselkriteriums bewirkt wird, ist vorgesehen, dass die gespeicherte Reifeninformation invalidiert wird, was bedeuten soll, dass die Reifeninformation zwar gespeichert bleibt, jedoch eine zugeordnete Information in der Radeinheit registriert bzw. gespeichert wird (z. B. durch Setzten eines "Flags"), welche besagt, dass diese Reifeninformation nicht valide ist. Im Hinblick auf das vorstehende Beispiel eines drastischen Druckverlustes ist dies sehr sinnvoll, da ein platter Reifen nicht mehr die Reifenspezifikationen gemäß der gespeicherten Reifeninformation erfüllt.

Das Behalten der gespeicherten Reifeninformation im Falle des Wechsels in den zweiten Betriebsmodus besitzt den Vorteil, dass Werkstattpersonal im Falle einer Instandsetzung des Reifens (bzw. gegebenenfalls lediglich einer Wiederbefüllung des Reifens, typischerweise mit Luft oder Stickstoff) die dem Reifen entsprechende Reifeninformation nicht neu in die Radeinheit einspeichern muss. Vielmehr kann vorgesehen sein, dass die gespeicherte Reifeninformation z. B. von dem Werkstattpersonal nach der Reifeninstandsetzung oder z. B. der Montage eines hinsichtlich seiner Spezifikationen identischen Reifens lediglich wieder validiert wird. Letztere Validierung kann unter Nutzung des oben genannten Aspekts der Erfindung auch automatisiert (bei Erfüllung des ersten Moduswechselkriteriums) erfolgen. Bei einer solchen Validierung kann z. B. ein hierfür vorgesehenes "Flag" so gesetzt werden, dass dieses angibt, dass die gespeicherten Reifendaten valide sind.

Falls in der Radeinheit eine Validierung und Invalidierung gespeicherter Reifeninformation vorgesehen ist, ist bevorzugt vorgesehen, dass jeder Wechsel von dem ersten Betriebsmodus in den zweiten Betriebsmodus gleichbedeutend mit einer Validierung ist bzw. eine solche Validierung bewirkt, wohingegen jeder Wechsel von dem zweiten Betriebsmodus in den ersten Betriebsmodus eine Invalidierung darstellt bzw. bewirkt. Es soll hierbei jedoch nicht ausgeschlossen sein, dass bei einem Wechsel von dem zweiten Betriebsmodus in den ersten Betriebsmodus die gespeicherte Reifeninformation gelöscht wird.

In einer Weiterbildung der Erfindung ist die Radeinheit ferner dazu ausgebildet,
- in dem ersten Betriebsmodus entweder in einem ein Verändern von gespeicherter Reifeninformation verhindernden ersten Betriebszustand oder in einem ein Verändern von gespeicherter Reifeninformation erlaubenden zweiten Betriebszustand zu arbeiten,
- bei einer Erfüllung eines ersten Zustandwechselkriteriums von dem ersten Betriebszustand in den zweiten Betriebszustand zu wechseln, und
- den Wechsel von dem ersten Betriebsmodus in den zweiten Betriebsmodus ausgehend von dem zweiten Betriebszustand durchzuführen und den Wechsel von dem zweiten Betriebsmodus in den ersten Betriebsmodus in den ersten Betriebszustand durchzuführen.

Bei dieser Weiterbildung ist demnach vorgesehen, dass es in dem ersten Betriebsmodus zwei voneinander unterscheidbare Submodi gibt, die hier als erster Betriebszustand und zweiter Betriebszustand bezeichnet werden und dass in dem ersten Betriebsmodus ein Verändern von gespeicherter Reifeninformation, sei es eine Einspeichern, eine Verändern im engeren Sinne oder ein Löschen nicht generell ermöglicht ist, sondern nur dann, wenn die Radeinheit sich während des ersten Betriebsmodus in dem zweiten Betriebszustand befindet.

Ferner ist bei dieser Weiterbildung bevorzugt spezifiziert, dass (automatische) Wechsel zwischen den beiden Betriebszuständen erfolgen, wenn ein hierfür jeweils vorgesehenes Zustandwechselkriterium erfüllt wird (dessen Erfüllung von der Radeinheit geprüft wird).

Schließlich ist bei dieser Weiterbildung auch noch spezifiziert, von welchem Betriebszustand des ersten Betriebsmodus aus der Wechsel in den zweiten Betriebsmodus erfolgt und in welchen Betriebszustand der Wechsel von dem zweiten Betriebsmodus in den ersten Betriebsmodus erfolgt.

Bei dieser Weiterbildung kann sich in der Praxis z. B. folgendes Szenario ergeben: Wenn ein Fahrzeug nach einem drastischen Druckverlust eines Reifens z. B. in eine Werkstatt gebracht wird und der betreffende Reifen nach einer Demontage der elektronischen Radeinheit entsorgt oder instandgesetzt wird, so kann mit dieser Weiterbildung sichergestellt werden, dass ein Verändern der gespeicherten Reifeninformation (bzw. alternativ oder zusätzlich eine Validierung der Reifeninformation) erst stattfinden kann, wenn die Radeinheit an einem neuen bzw. an dem instandgesetzten Reifen integriert wurde, was von der Radeinheit durch Überprüfung des ersten Zustandwechselkriteriums festgestellt werden kann. Wenn dieses Kriterium erfüllt ist, so erfolgt ein Wechsel von dem ersten Betriebszustand in den zweiten Betriebszustand und ein Verändern von gespeicherter Reifeninformation ist möglich.

In einer Ausführungsform ist vorgesehen, dass die Erfüllung des ersten Zustandwechselkriteriums zumindest von dem für eine Drehbewegung des Fahrzeugrades repräsentativen Betriebsparameter des Fahrzeugrades und/oder von dem Reifendruck abhängt.

Was die konkrete Wahl des für die Drehbewegung des Fahrzeugrades repräsentativen Betriebsparameters des Fahrzeugrades anbelangt, so sei zunächst wieder auf die weiter oben bereits gegebenen Erläuterungen betreffend hierfür geeignete Betriebsparameter verwiesen.

Insbesondere kann die Erfüllung des ersten Zustandwechselkriteriums z. B. voraussetzen, dass der Wert der Drehgeschwindigkeit des Fahrzeugrades einen vorbestimmten Schwellwert unterschreitet.

Alternativ oder zusätzlich kann vorgesehen sein, dass die Erfüllung des ersten Zustandwechselkriteriums voraussetzt, dass der Reifendruck einen vorbestimmten Schwellwert überschreitet.

Die Vorgabe derartiger Schwellwerte für die Drehgeschwindigkeit wie auch für den Reifendruck im Rahmen des ersten Zustandwechselkriteriums kann jeweils in Bereichen vorgesehen sein, die weiter oben im Zusammenhang mit der Überprüfung des ersten und zweiten Moduswechselkriteriums bereits beschrieben wurden.

Eine weitere Voraussetzung für die Erfüllung des ersten Zustandwechselkriteriums kann z. B. sein, dass die Radeinheit einen hierfür vorgesehenen Wechselbefehl erhält, beispielsweise einen drahtlos, z. B. per Funk, zur Radeinheit gesendeten Befehl. Wenn dieser Befehl willentlich durch einen Benutzer wie etwa Werkstattpersonal zu geben ist, so kann damit die Gefahr eines versehentlichen bzw. falschen Veränderns der gespeicherten Reifeninformation verringert werden.

Hinsichtlich der drahtlosen Übertragung eines derartigen Wechselbefehls bzw. hierfür geeigneter Einrichtungen kann z. B. auf bekannte Funkübertragungsverfahren zurückgegriffen werden. Gegebenenfalls kann der Wechselbefehl z. B. Bestandteil eines funktechnisch zur Radeinheit übertragenen Datensignals sein, mittels welchem auch eine gewünschte Veränderung der gespeicherten Radinformation bewirkt wird, welches also z. B. veränderte Reifeninformationsdaten beinhaltet.

Die Radeinheit kann ferner dazu ausgebildet sein, bei einer Erfüllung eines zweiten Zustandwechselkriteriums von dem zweiten Betriebszustand in den ersten Betriebszustand zu wechseln.

Die Erfüllung des zweiten Zustandwechselkriteriums kann z. B. voraussetzen, dass der Reifendruck einen vorbestimmten Schwellwert unterschreitet. Hinsichtlich einer geeigneten Vorgabe dieses Schwellwerts wird auf die weiter oben bereits gegebenen Erläuterungen zur Bemessung eines Reifendruckschwellwertes zur Berücksichtigung bei dem zweiten Moduswechselkriterium und dem ersten Zustandwechselkriterium verwiesen (also z. B. ca. 1,5 bar).

Das Vorsehen eines zweiten Zustandwechselkriteriums besitzt insbesondere den Vorteil, dass damit erreicht werden kann, dass nach einer Veränderung der Reifeninformation (in dem zweiten Betriebszustand) und einem nachfolgenden Wiederausbau der Radeinheit aus dem betreffenden Reifen kein Wechsel in den zweiten Betriebsmodus erfolgen kann. Vielmehr würde in diesem Fall durch die Erfassung des den Schwellwert unterschreitenden Reifendrucks die Radeinheit von dem zweiten Betriebszustand wieder in den ersten Betriebszustand wechseln, so dass erst nach erneuter Integration der Radeinheit in einen (gegebenenfalls anderen) Reifen die Radeinheit wieder in den zweiten Betriebszustand wechselt und nachfolgend (z. B. nach Erfüllung des ersten Moduswechselkriteriums) in den zweiten Betriebsmodus wechseln kann.

Die Erfindung wird nachfolgend anhand von Ausführungsbeispielen mit Bezug auf die beigefügten Zeichnungen weiter beschrieben. Es stellen dar:
- Fig. 1: eine Seitenansicht eines mit einer elektronischen Radeinheit ausgestatteten Fahrzeugrades gemäß eines Ausführungsbeispiels,
- Fig. 2: ein Blockschaltbild der elektronischen Radeinheit von Fig. 1 und
- Fig. 3: ein Diagramm zur Veranschaulichung verschiedener Betriebsmodi und verschiedener Betriebszustände der elektronischen Radeinheit.

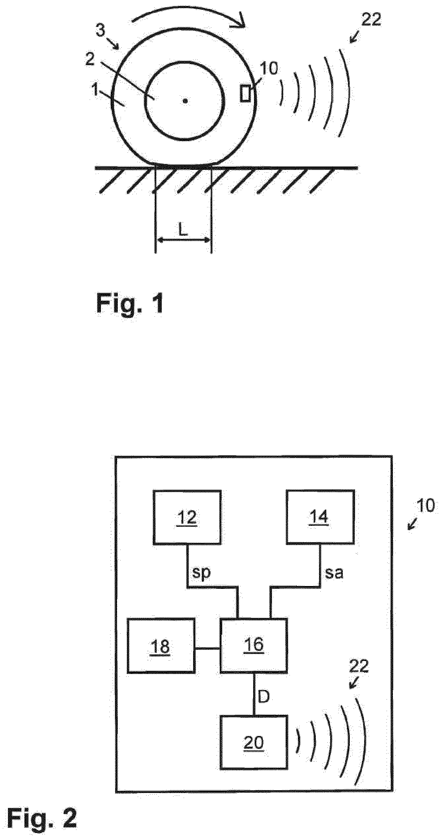

Fig. 1 zeigt einen Reifen 1, der zusammen mit einer Felge 2 ein Fahrzeugrad 3 eines Kraftfahrzeuges (nicht dargestellt) bildet.

An dem Fahrzeugrad 3 ist eine elektronische Radeinheit 10 angeordnet und zwar im dargestellten Beispiel an einer Innenseite einer Reifenlauffläche des z. B. mit Luft befüllten Reifens 1 (z. B. aufgeklebt oder z. B. in einer Tasche eingeschoben oder z. B. an einer eingeklebten Halterung lösbar befestigt).

Der Hauptzweck der Radeinheit 10 besteht darin, im Betrieb des betreffenden Fahrzeuges den Reifendruck in dem Reifen 1 zu messen und von Zeit zu Zeit entsprechende Messergebnisse mittels elektromagnetischer Signale in Form von Funksignalen 22 an eine fahrzeugseitige, d. h. in dem betreffenden Fahrzeug angeordnete Funkempfangseinrichtung (nicht dargestellt) zu senden.

Die Funkempfangseinrichtung decodiert in dem Funksignal 22 enthaltene Daten und leitet diese z. B. über ein digitales Bussystem (nicht dargestellt) an ein zentrales Steuergerät (nicht dargestellt) des Fahrzeuges weiter. Die in dem Funksignal 22 enthaltenen Daten, hier insbesondere Messwerte des Reifendrucks, werden durch das zentrale Steuergerät ausgewertet und/oder für eine Weiterverwendung in anderen Teilen einer Bordelektronik des Fahrzeuges zur Verfügung gestellt.

Ein weiterer Zweck der elektronischen Radeinheit 10 besteht im dargestellten Ausführungsbeispiel darin, von Zeit zu Zeit Messergebnisse betreffend einen Reifenlatsch, hier z. B. eine Länge L einer Reifenaufstandsfläche des Reifens 1 beim Abrollen (vgl. Pfeil in Fig. 1) des Reifens 1 auf einem Fahruntergrund mittels der Funksignale 22 zu übermitteln.

Ferner können mittels der Funksignale 22 Daten einer in der Radeinheit 10 gespeicherten Reifeninformation teilweise oder vollständig zu dem Fahrzeug gesendet werden. Derartige reifenspezifische Daten können seitens des Fahrzeuges z. B. vorteilhaft bei der Steuerung von fahrdynamischen Funktionen (ABS, ESP, etc.) verwendet werden. Alternativ oder zusätzlich kann vorgesehen sein, dass die gespeicherte Reifeninformation von der Radeinheit 10 selbst genutzt wird, etwa im Zusammenhang mit der bereits erwähnten Erfassung des Reifenlatsches oder anderer Funktionalitäten der Radeinheit 10 (z. B. einer Profiltiefenermittlung, einer Radlastermittlung, etc.).

Im Hinblick auf den typischen Fall der Ausstattung mehrerer Fahrzeugräder desselben Fahrzeuges mit derartigen elektronischen Radeinheiten 10 enthalten die mit dem jeweiligen Funksignal 22 zu dem Fahrzeug gesandten Daten schließlich noch einen die sendende Radeinheit 10 identifizierenden Identifikationscode.

Die korrekte, d. h. zu dem Reifen 1 passende Reifeninformation kann z. B. bei einer Montage des Fahrzeugrades 3 bzw. des Reifens 1 an dem betreffenden Fahrzeug in die für diesen Reifen 1 vorgesehene Radeinheit 10 eingespeichert werden.

Fig. 2 zeigt den Aufbau der elektronischen Radeinheit 10 detaillierter.

Die Radeinheit 10 beinhaltet einen Drucksensor 12 zur Messung des momentanen Reifendrucks sowie einen Beschleunigungssensor 14 zur Messung einer momentanen Beschleunigung (hier z. B. einer Radialbeschleunigung). Der Drucksensor 12 gibt ein den momentanen Reifendruck repräsentierendes Sensorsignal "sp" aus.

Bei einer in Fig. 1 durch einen Pfeil symbolisierten Drehung des Fahrzeugrades 3 misst der Beschleunigungssensor 14 die an der Anordnungsstelle der Radeinheit 10 vorliegende Radialbeschleunigung und gibt ein entsprechendes Sensorsignal "sa" aus.

Da sich diese Beschleunigung aus einer durch die Gravitation bewirkten Komponente und einer durch die Drehung des Rades 3 bewirkten Komponente zusammensetzt, kann durch eine entsprechende Auswertung des Sensorsignals "sa" des Beschleunigungssensors 14 (z. B. mittels Extraktion der Gravitationskomponente) die momentane Drehwinkelposition wie auch die momentane Drehwinkelgeschwindigkeit des Rades 3 ermittelt werden. Außerdem kommt es aufgrund der sich im unteren Umfangsbereich des Rades 3 ausbildenden Reifenaufstandsfläche bei jedem Durchgang der Radeinheit 10 durch den Bereich dieser Reifenaufstandsfläche hindurch zu entsprechenden Signalcharakteristika in dem von dem Beschleunigungssensor 14 gelieferten Sensorsignal.

Auch anhand dieser Signalcharakteristika, die z. B. bei einer Fahrt mit konstanter Geschwindigkeit periodisch auftreten, kann somit der Durchgang der Radeinheit 10 durch die Reifenaufstandsfläche und durch eine weitere Auswertung des Sensorsignals in einfacher Weise die momentane Drehwinkelposition (und somit auch die Drehwinkelgeschwindigkeit) des Rades 3 ermittelt werden.

Ferner könnte z. B. auch ein sogenannter Schocksensor oder ein Verformungssensor oder ein anderer geeigneter Sensor anstelle des Beschleunigungssensors 14 eingesetzt werden, um durch Auswertung von dessen Sensorsignal eine Erfassung einer Drehwinkelposition und/oder Drehwinkelgeschwindigkeit zu realisieren.

In der Radeinheit 10 werden die für den Reifendruck und die Beschleunigung repräsentativen Messwerte, wie in Fig. 2 ersichtlich, an eine programmgesteuerte Auswerteeinrichtung, hier einen Mikrocontroller 16, kommuniziert, welcher basierend darauf Daten D erzeugt und an eine Funksendeeinrichtung 20 weiterleitet, mittels welcher jeweils ein diese Daten D enthaltendes Funksignal 22 gesendet wird.

Der Mikrocontroller 16 ist mit einer dem Mikrocontroller 16 zugeordneten Speichereinrichtung 18 verbunden, in welcher im dargestellten Ausführungsbeispiel ein den Betrieb des Mikrocontrollers 16 steuerndes Programm sowie die bereits erwähnte Reifeninformation gespeichert ist.

Das Einspeichern der Reifeninformation oder ein nachträgliches Aktualisieren der Reifeninformation in der Speichereinrichtung 18 kann z. B. dadurch realisiert werden, dass die dargestellte Funksendeeinrichtung 20 auch eine Funktionalität zum Empfangen entsprechender Funksignale besitzt, um in drahtloser Weise eine Reifeninformation über diese Funksendeeinrichtung 20 und den Mikrocontroller 16 in die Speichereinrichtung 18 zu übertragen. Alternativ kann die Radeinheit 10 z. B. mit einer eigens hierfür vorgesehenen Funkempfangseinrichtung ausgestattet sein.

Die Neuerung gemäß der vorliegenden Erfindung betrifft im dargestellten Ausführungsbeispiel die Arbeitsweise der Radeinheit 10 bzw. von deren Mikrocontroller 16 im Zusammenhang mit der Veränderung der in der Speichereinrichtung 18 gespeicherten Reifeninformation, wie im Folgenden näher erläutert wird.

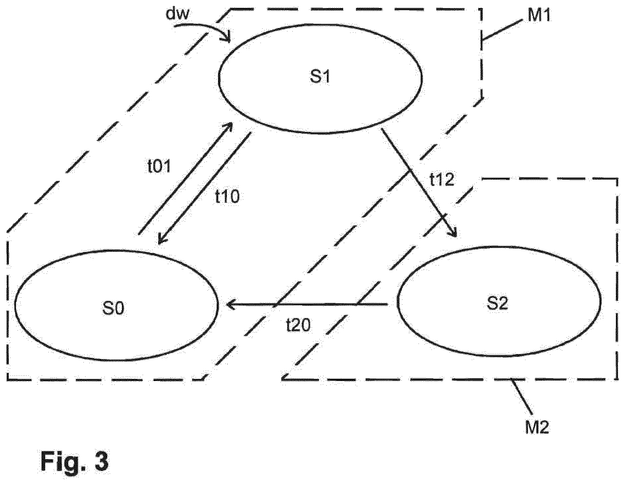

Fig. 3 veranschaulicht dazu im dargestellten Ausführungsbeispiel vorgesehene Betriebszustände S0, S1 und S2 der Radeinheit 10. Aufgrund der Programmsteuerung des Mikrocontrollers 16 werden diese Betriebszustände im dargestellten Ausführungsbeispiel durch die in der Speichereinrichtung 18 gespeicherte Software (Steuerprogramm) implementiert.

Des Weiteren sind in Fig. 3 die im dargestellten Beispiel möglichen Übergänge zwischen den Betriebszuständen S0, S1 und S2 durch entsprechende Pfeile t01, t10, t12 und t20 symbolisiert.

Die Betriebszustände S0 und S1 bilden zusammen einen ersten Betriebsmodus M1, wohingegen der Betriebszustand S2 im dargestellten Beispiel gleichbedeutend mit einem zweiten Betriebsmodus M2 ist.

Der Betriebszustand S0 ist ein "Invalide Daten-Zustand", in welchem die in der Radeinheit 10 gespeicherte Reifeninformation invalide oder leer ist. Die Invalidität der Reifeninformation kann softwaretechnisch z. B. durch Setzen eines entsprechenden "Flags" implementiert sein.

Der Betriebszustand S0 liegt beispielsweise vor, wenn die Radeinheit 10 in einer Werkstatt zur Integration in das Fahrzeugrad 3 bzw. den Reifen 1 bereitgestellt wird. Die Radeinheit 10 ist dazu ausgebildet, in dem Betriebszustand S0 ein Verändern von gespeicherter Reifeninformation zu verhindern.

Ein Verändern von gespeicherter Reifeninformation, z. B. ein Übertragen von (aktualisierter) Reifeninformation zu der Radeinheit 10, ist demgegenüber in dem Betriebszustand S1 ermöglicht. Eine derartige Datenübertragung ist in Fig. 3 durch den Pfeil "dw" symbolisiert. In dem Betriebszustand S1 kann z. B. ein Einspeichern von Reifeninformation oder ein Aktualisieren einer bereits gespeicherten Reifeninformation erfolgen.

Der Übergang t01 von dem ersten Betriebszustand S0 in den zweiten Betriebszustand S1 erfolgt, sobald die Radeinheit 10 die Erfüllung eines ersten Zustandwechselkriteriums erkennt. Das erste Zustandwechselkriterium ist im dargestellten Beispiel erfüllt, wenn der erfasste Reifendruck einen vorbestimmten Schwellwert (hier z. B. 1,5 bar) überschreitet und die erfasste Drehgeschwindigkeit des Fahrzeugrades 3 bzw. Reifens 1 einen vorbestimmten Schwellwert (hier z. B. 4 UpM) unterschreitet und ein funktechnisch übermittelter Wechselbefehl empfangen wird. Der Wechselbefehl wird hierbei z. B. von Werkstattpersonal (mittels geeigneter technischer Ausrüstung) gesendet. Separat von diesem Wechselbefehl oder innerhalb desselben Funksignals kann sodann die funktechnische Übertragung dw von Daten zur Veränderung der gespeicherten Reifeninformation erfolgen.

Der Betriebszustand S1 ist mithin ein "Beschreib-Zustand", in welchem ein Verändern von gespeicherter Reifeninformation ermöglicht ist.

Optional kann in dem Betriebszustand S1 vorgesehen sein, dass (z. B. wieder in funktechnischer Weise) auch noch eine z. B. von dem Werkstattpersonal zu bewirkende Validierung der gespeicherten Reifeninformation ermöglicht ist.

Der Übergang von dem Betriebszustand S1 zurück zu dem Betriebszustand S0 erfolgt bei Erfüllung eines zweiten Zustandwechselkriteriums, welches im dargestellten Beispiel dann erfüllt ist, wenn der Reifendruck einen vorbestimmten Schwellwert unterschreitet. In diesem Fall kann ein weiteres Verändern der Reifeninformation (oder gegebenenfalls eine Validierung) erst dann erfolgen, wenn durch Erfüllung des ersten Zustandwechselkriteriums wieder ein Übergang von dem Betriebszustand S0 in den Betriebszustand S1 erfolgt.

Ausgehend von dem Betriebszustand S1 erfolgt der Übergang t12 in den Betriebszustand S2, gleichbedeutend mit einem Wechsel von dem ersten Betriebsmodus M1 in den zweiten Betriebsmodus M2, bei Erfüllung eines ersten Moduswechselkriteriums, wobei die Erfüllung dieses Kriteriums im dargestellten Beispiel gegeben ist, wenn die gespeicherte Reifeninformation "nicht leer" ist und die erfasste Drehgeschwindigkeit des Fahrzeugrades 3 bzw. Reifens 1 einen vorbestimmten Schwellwert überschreitet.

Im dargestellten Beispiel ist der Schwellwert für die Drehgeschwindigkeit so gewählt, dass damit ein beginnender Fahrbetrieb des betreffenden Fahrzeuges erkannt wird und so im Falle "nicht leerer" Reifeninformation der Übergang in den Betriebszustand S2 ausgelöst wird.

Der Betriebszustand S2 ist ein "Valide Daten/Blockierte Daten-Zustand", in welchem die gespeicherte Reifeninformation als valide betrachtet wird und ein Verändern der gespeicherten Reifeninformation verhindert ist. Im normalen Fahrbetrieb des Fahrzeuges ist somit ausgeschlossen, dass die gespeicherte Reifeninformation z. B. versehentlich oder in krimineller Weise manipuliert wird.

Der Übergang t20 von dem Betriebszustand S2 bzw. dem zweiten Betriebsmodus M2 in den Betriebszustand S0 bzw. den ersten Betriebsmodus M1 erfolgt bei Erfüllung eines zweiten Moduswechselkriteriums, dessen Erfüllung im dargestellten Beispiel gegeben ist, wenn der Reifendruck einen vorbestimmten Schwellwert unterschreitet und die Drehgeschwindigkeit des Fahrzeugrades 3 bzw. des Reifens 1 einen vorbestimmten Schwellwert unterschreitet.

Mit diesem zweiten Moduswechselkriterium wird im dargestellten Beispiel z. B. der Fall erfasst, in welchem der Reifen 1 platzt oder in anderer Weise drastisch an Reifendruck verliert und das Fahrzeug zum Stillstand gebracht wird.

Optional kann bei dem Übergang t20 vorgesehen sein, dass die gespeicherte Reifeninformation gelöscht wird und somit eine "leere" Reifeninformation resultiert.

### Bezugszeichenliste

- 1: Reifen
- 2: Felge
- 3: Fahrzeugrad
- L: Reifenlatschlänge
- 10: elektronische Radeinheit
- 12: Drucksensor
- sp: Sensorsignal des Drucksensors
- 14: Beschleunigungssensor
- sa: Sensorsignal des Beschleunigungssensors
- 16: Mikrocontroller
- 18: Speichereinrichtung
- D: Daten
- 20: Funksendeeinrichtung
- 22: Funksignal
- M1: erster Betriebsmodus
- M2: zweiter Betriebsmodus
- S0: erster Betriebszustand des ersten Betriebsmodus
- S1: zweiter Betriebszustand des ersten Betriebsmodus
- S2: Betriebszustand des zweiten Betriebsmodus
- dw: Übertragung von Daten (Verändern von Reifeninformation)

## Patentansprüche

1. Elektronische Radeinheit (10) zum Erfassen eines Reifendrucks eines Reifens (1) eines Fahrzeugrades (3), zum Speichern von Reifeninformation des Reifens (1) und zum Senden von Reifendruckinformation und Reifeninformation, **dadurch gekennzeichnet, dass** die Radeinheit (10) dazu ausgebildet ist, in einem ersten Betriebsmodus (M1) ein Verändern von gespeicherter Reifeninformation zu ermöglichen und in einem zweiten Betriebsmodus (M2) ein Verändern von gespeicherter Reifeninformation zu verhindern, und ferner dazu ausgebildet ist, bei einer Erfüllung eines ersten Moduswechselkriteriums von dem ersten Betriebsmodus (M1) in den zweiten Betriebsmodus (M2) zu wechseln, wobei die Erfüllung des ersten Moduswechselkriteriums zumindest von einem für eine Drehbewegung des Fahrzeugrades (3) repräsentativen Betriebsparameter des Fahrzeugrades (3) abhängt und wobei die Erfüllung des ersten Moduswechselkriteriums zumindest von einem Wert einer Drehgeschwindigkeit des Fahrzeugrades (3) abhängt.

2. Elektronische Radeinheit (10) nach Anspruch 1, wobei die Reifeninformation des Reifens (1) Daten betreffend einen Reifenhersteller, einen Reifentyp, eine Reifenabmessung, einen Tragfähigkeitsindex und/oder einen Geschwindigkeitsindex beinhaltet.

3. Elektronische Radeinheit (10) nach Anspruch 1 oder 2, wobei die Erfüllung des ersten Moduswechselkriteriums zumindest voraussetzt, dass der Wert der Drehgeschwindigkeit des Fahrzeugrades (3) einen vorbestimmten Schwellwert überschreitet.

4. Elektronische Radeinheit (10) nach einem der vorangehenden Ansprüche, wobei die Erfüllung des ersten Moduswechselkriteriums ferner von einem Inhalt der gespeicherten Reifeninformation abhängt.

5. Elektronische Radeinheit (10) nach Anspruch 4, wobei die Erfüllung des ersten Moduswechselkriteriums voraussetzt, dass die Reifeninformation nicht leer ist.

6. Elektronische Radeinheit (10) nach einem der vorangehenden Ansprüche, wobei die Radeinheit (10) ferner dazu ausgebildet ist, bei einer Erfüllung eines zweiten Moduswechselkriteriums von dem zweiten Betriebsmodus (M2) in den ersten Betriebsmodus (M1) zu wechseln, wobei die Erfüllung des zweiten Moduswechselkriteriums zumindest von dem für eine Drehbewegung des Fahrzeugrades (3) repräsentativen Betriebsparameter des Fahrzeugrades (3) abhängt.

7. Elektronische Radeinheit (10) nach Anspruch 6, wobei die Erfüllung des zweiten Moduswechselkriteriums zumindest von dem Wert der Drehgeschwindigkeit des Fahrzeugrades (3) abhängt.

8. Elektronische Radeinheit (10) nach Anspruch 7, wobei die Erfüllung des zweiten Moduswechselkriteriums zumindest voraussetzt, dass der Wert der Drehgeschwindigkeit des Fahrzeugrades (3) einen vorbestimmten Schwellwert unterschreitet.

9. Elektronische Radeinheit (10) nach einem der Ansprüche 6 bis 8, wobei die Erfüllung des zweiten Moduswechselkriteriums ferner voraussetzt, dass der Reifendruck einen vorbestimmten Schwellwert unterschreitet.

10. Elektronische Radeinheit (10) nach einem der vorangehenden Ansprüche, wobei die Radeinheit (10) ferner dazu ausgebildet ist,
- in dem ersten Betriebsmodus (M1) entweder in einem ein Verändern von gespeicherter Reifeninformation verhindernden ersten Betriebszustand (S0) oder in einem ein Verändern von gespeicherter Reifeninformation erlaubenden zweiten Betriebszustand (S1) zu arbeiten,
- bei einer Erfüllung eines ersten Zustandwechselkriteriums von dem ersten Betriebszustand (S0) in den zweiten Betriebszustand (S1) zu wechseln, und
- den Wechsel von dem ersten Betriebsmodus (M1) in den zweiten Betriebsmodus (M2) ausgehend von dem zweiten Betriebszustand (S1) durchzuführen und den Wechsel von dem zweiten Betriebsmodus (M2) in den ersten Betriebsmodus (M1) in den ersten Betriebszustand (S0) durchzuführen.

11. Elektronische Radeinheit (10) nach Anspruch 10, wobei die Erfüllung des ersten Zustandwechselkriteriums zumindest von dem für eine Drehbewegung des Fahrzeugrades (3) repräsentativen Betriebsparameter des Fahrzeugrades (3) und/oder von dem Reifendruck abhängt.

12. Elektronische Radeinheit (10) nach Anspruch 10 oder 11, wobei die Radeinheit (10) ferner dazu ausgebildet ist, bei einer Erfüllung eines zweiten Zustandwechselkriteriums von dem zweiten Betriebszustand (S1) in den ersten Betriebszustand (S0) zu wechseln.

13. Elektronische Radeinheit (10) nach Anspruch 12, wobei die Erfüllung des zweiten Zustandwechselkriteriums voraussetzt, dass der Reifendruck einen vorbestimmten Schwellwert unterschreitet.

## Claims

1. Electronic wheel unit (10) for detecting a tire pressure of a tire (1) of a vehicle wheel (3), for storing tire information of the tire (1) and for sending tire pressure information and tire information, **characterized in that** the wheel unit (10) is designed to allow alteration of stored tire information in a first mode of operation (M1) and to prevent alteration of stored tire information in a second mode of operation (M2), and is further designed to change from the first mode of operation (M1) to the second mode of operation (M2) when a first mode change criterion is satisfied, the satisfaction of the first mode change criterion being dependent at least on an operating parameter of the vehicle wheel (3) that is representative of a rotational movement of the vehicle wheel (3) and the satisfaction of the first mode change criterion being dependent at least on a value of a rotation speed of the vehicle wheel (3).

2. Electronic wheel unit (10) according to Claim 1, wherein the tire information of the tire (1) contains data relating to a tire manufacturer, a tire type, a tire dimension, a bearing strength index and/or a speed index.

3. Electronic wheel unit (10) according to Claim 1 or 2, wherein the satisfaction of the first mode change criterion at least presupposes that the value of the rotation speed of the vehicle wheel (3) is above a predetermined threshold value.

4. Electronic wheel unit (10) according to one of the preceding claims, wherein the satisfaction of the first mode change criterion is further dependent on a content of the stored tire information.

5. Electronic wheel unit (10) according to Claim 4, wherein the satisfaction of the first mode change criterion presupposes that the tire information is not blank.

6. Electronic wheel unit (10) according to one of the preceding claims, wherein the wheel unit (10) is further designed to change from the second mode of operation (M2) to the first mode of operation (M1) when a second mode change criterion is satisfied, the satisfaction of the second mode change criterion being dependent at least on the operating parameter of the vehicle wheel (3) that is representative of a rotational movement of the vehicle wheel (3).

7. Electronic wheel unit (10) according to Claim 6, wherein the satisfaction of the second mode change criterion is dependent at least on the value of the rotation speed of the vehicle wheel (3).

8. Electronic wheel unit (10) according to Claim 7, wherein the satisfaction of the second mode change criterion at least presupposes that the value of the rotation speed of the vehicle wheel (3) is below a predetermined threshold value.

9. Electronic wheel unit (10) according to one of Claims 6 to 8, wherein the satisfaction of the second mode change criterion further presupposes that the tire pressure is below a predetermined threshold value.

10. Electronic wheel unit (10) according to one of the preceding claims, wherein the wheel unit (10) is further designed
- to operate either in a first operating state (S0), which prevents alteration of stored tire information, or in a second operating state (S1), which permits alteration of stored tire information, in the first mode of operation (M1),
- to change from the first operating state (S0) to the second operating state (S1) when a first state change criterion is satisfied, and
- to perform the change from the first mode of operation (M1) to the second mode of operation (M2) from the second operating state (S1) and to perform the change from the second mode of operation (M2) to the first mode of operation (M1) into the first operating state (S0).

11. Electronic wheel unit (10) according to Claim 10, wherein the satisfaction of the first state change criterion is dependent at least on the operating parameter of the vehicle wheel (3) that is representative of a rotational movement of the vehicle wheel (3) and/or on the tire pressure.

12. Electronic wheel unit (10) according to Claim 10 or 11, wherein the wheel unit (10) is further designed to change from the second operating state (S1) to the first operating state (S0) when a second state change criterion is satisfied.

13. Electronic wheel unit (10) according to Claim 12, wherein the satisfaction of the second state change criterion presupposes that the tire pressure is below a predetermined threshold value.

## Revendications

1. Unité de roue (10) électronique destinée à détecter une pression de pneu d'un pneu (1) d'une roue de véhicule (3), destinée à mémoriser des informations de pneu du pneu (1) et destinée à envoyer des informations de pression de pneu et des informations de pneu, **caractérisée en ce que** l'unité de roue (10) est configurée pour, dans un premier mode de fonctionnement (M1), rendre possible une modification des informations de pneu mémorisées et, dans un deuxième mode de fonctionnement (M2), empêcher une modification des informations de pneu mémorisées, et est en outre configurée pour, lorsqu'un premier critère de changement de mode est satisfait, passer du premier mode de fonctionnement (M1) au deuxième mode de fonctionnement (M2), la satisfaction du premier critère de changement de mode dépendant au moins d'un paramètre de fonctionnement de la roue de véhicule (3) représentatif d'un mouvement de rotation de la roue de véhicule (3) et la satisfaction du premier critère de changement de mode dépendant au moins d'une valeur d'une vitesse de rotation de la roue de véhicule (3).

2. Unité de roue (10) électronique selon la revendication 1, les informations de pneu du pneu (1) contenant des données concernant un fabricant de pneu, un type de pneu, une taille de pneu, un indice de capacité de charge et/ou un indice de vitesse.

3. Unité de roue (10) électronique selon la revendication 1 ou 2, la satisfaction du premier critère de changement de mode supposant au moins que la valeur de la vitesse de rotation de la roue de véhicule (3) dépasse une valeur de seuil prédéterminée.

4. Unité de roue (10) électronique selon l'une des revendications précédentes, la satisfaction du premier critère de changement de mode dépendant en outre d'un contenu des informations de pneu mémorisées.

5. Unité de roue (10) électronique selon la revendication 4, la satisfaction du premier critère de changement de mode supposant que les informations de pneu ne sont pas vides.

6. Unité de roue (10) électronique selon l'une des revendications précédentes, l'unité de roue (10) étant en outre configurée pour, lorsqu'un deuxième critère de changement de mode est satisfait, passer du deuxième mode de fonctionnement (M2) au premier mode de fonctionnement (M1), la satisfaction du deuxième critère de changement de mode dépendant au moins du paramètre de fonctionnement de la roue de véhicule (3) représentatif d'un mouvement de rotation de la roue de véhicule (3).

7. Unité de roue (10) électronique selon la revendication 6, la satisfaction du deuxième critère de changement de mode dépendant au moins de la vitesse de rotation de la roue de véhicule (3).

8. Unité de roue (10) électronique selon la revendication 7, la satisfaction du deuxième critère de changement de mode supposant au moins que la valeur de la vitesse de rotation de la roue de véhicule (3) devient inférieure à une valeur de seuil prédéterminée.

9. Unité de roue (10) électronique selon l'une des revendications 6 à 8, la satisfaction du deuxième critère de changement de mode supposant en outre que la pression de pneu devient inférieure à une valeur de seuil prédéterminée.

10. Unité de roue (10) électronique selon l'une des revendications précédentes, l'unité de roue (10) étant en outre configurée pour,
- dans le premier mode de fonctionnement (M1), soit travailler dans un premier état de fonctionnement (S0) empêchant une modification des informations de pneu mémorisées, soit dans un deuxième état de fonctionnement (S1) autorisant une modification des informations de pneu mémorisées,
- changer du premier état de fonctionnement (S0) au deuxième état de fonctionnement (S1) lorsqu'un premier critère de changement d'état est satisfait, et
- effectuer le passage du premier mode de fonctionnement (M1) au deuxième mode de fonctionnement (M2) en partant du deuxième état de fonctionnement (S1) et effectuer le passage du deuxième mode de fonctionnement (M2) au premier mode de fonctionnement (M1) dans le premier état de fonctionnement (S0).

11. Unité de roue (10) électronique selon la revendication 10, la satisfaction du premier critère de changement d'état dépendant au moins du paramètre de fonctionnement de la roue de véhicule (3) représentatif d'un mouvement de rotation de la roue de véhicule (3) et/ou de la pression de pneu.

12. Unité de roue (10) électronique selon la revendication 10 ou 11, l'unité de roue (10) étant en outre configurée pour changer du deuxième état de fonctionnement (S1) au premier état de fonctionnement (S0) lorsqu'un deuxième critère de changement d'état est satisfait.

13. Unité de roue (10) électronique selon la revendication 12, la satisfaction du deuxième critère de changement d'état supposant que la pression de pneu devient inférieure à une valeur de seuil prédéterminée.
